# EUROPEAN PATENT APPLICATION

(11) **EP 2 493 212 A1**
(43) Date of publication of application: **29.08.2012**
(21) Application number: 12157381.0
(22) Date of filing: 28.02.2012
(51) Int. Cl.: H04R 5/02, H04N 5/60, H04N 5/64

(54) **Auxiliary speaker and television sound system**

(30) Priority: 28.02.2011 GB 201103314
(71) Applicant: Midbass Distribution Limited, Sutton Coldfield West Midlands B75 7BU (GB)
(72) Inventor: Venables, Carl, Sutton Coldfield, West Midlands B75 7BU (GB)
(74) Representative: Gee, Steven William

(57) **Abstract**

This invention relates to an auxiliary speaker (24) for a television (10), and to a television sound system. The auxiliary speaker has an output frequency range with a lower limit of approximately 30Hz and an upper limit of approximately 500Hz. The auxiliary speaker can therefore replace or supplement the low frequency audio output of the television for which the television's internal speakers (16) are typically deficient.

## Description

### FIELD OF THE INVENTION

This invention relates to an auxiliary speaker (or loudspeaker), and in particular to an auxiliary speaker for a television. The invention also relates to a television sound system.

### BACKGROUND TO THE INVENTION

Throughout this description reference is made to a "television", and this term is intended to include all video display units, including those which are not usually referred to as televisions. As one example the term television when used herein specifically includes computer monitors.

The sound generated during a television programme and the like which is shown on a television is an important element in the viewing experience, and plays a large part in the viewer's enjoyment of the programme.

Most televisions which are sold nowadays are "flat screen" televisions, using LED, LCD or plasma technology. The housing of a flat screen television is considerably smaller that the housing of a cathode ray television having a similar size of screen. The reduction in the size of the television housing has an effect upon the sound which can be generated by the television because the space available within which the speakers can be located is significantly reduced. Typically, the speakers of a modern television are located in the relatively small space below and to either side of the screen.

The generation of lower frequency sounds requires a larger speaker than the generation of higher frequency sounds, and so it is usually the lower frequency sounds which are compromised as a result of the lack of space available within the housings of flat screen televisions.

Televisions are not only used to display broadcast television programmes, but are also used to display films stored on media such as DVDs, and also to display gaming images created by games consoles. Action films, and many action games played on games consoles, use low frequency sounds to generate the required atmosphere for the viewer or gamer. In particular, the sound of explosions and the like is enhanced by the production of high volume low frequency (or bass) sounds.

The inventor has realised that the speakers fitted to modern televisions are not able to handle the full range of low frequency sounds, at sufficient volume, and so the effect of the low frequency sounds upon a viewer of an action film, or the player of an action game, is less than intended by the producer of the film or game. A viewer's appreciation of the full sound environment intended by a film producer, and a gamer's appreciation of the full sound environment intended by a video game producer, is often limited by the television's inability to produce low frequency sounds at high volume.

It is known to fit auxiliary speakers to a television for the purpose of enhancing the sound quality, and perhaps producing a "surround sound" environment, the known auxiliary speakers replacing the television's own speakers. The inventor has appreciated that such known arrangements are unnecessarily complex, however, and a simpler and more tailored solution is required.

### SUMMARY OF THE INVENTION

According to the invention, there is provided an auxiliary speaker for a television, the auxiliary speaker having a frequency range of from around 30Hz to around 500Hz. Alternatively, the lower limit of the frequency range can be 35Hz.

It will be appreciated that frequencies around 30Hz are close to the lower end of the human hearing range, and so represent the lowest frequencies which will normally be used in films and video games. The top end of the frequency range is also in the low frequency or bass range, so that the auxiliary speaker is only able to produce bass sounds. The inventor has therefore realised that the television's own speakers are perfectly adequate for high frequency sounds and mid-range sounds (the space available within the television housing being sufficient for speakers operating in those frequency ranges), and the auxiliary speaker is required only for the low frequency range where the television's speakers are often inadequate.

Because the size and shape of the auxiliary speaker is not limited by the design of the television, its housing can be as large as desired to produce the required frequency range. It is likely that the auxiliary speaker be placed in a position where it is not readily visible, so that the speaker housing can be designed to be primarily functional rather than primarily aesthetic as is the case with the housing of a television. Also, the auxiliary speaker can be large enough to accommodate the desired degree of amplification so as to produce the very loud bass sounds which are a feature of many action films and video games.

Preferably, the auxiliary speaker can include a controller which receives signals dependent upon the output of the television speakers. The controller can tailor the output of the auxiliary speaker to complement the sounds produced by the televisions speakers. For example, the controller may be set to restrict the upper limit of the frequency range of the auxiliary speaker to less than 500Hz in cases where the television speakers can adequately produce the required volume of sound in that part of the frequency range.

The auxiliary speaker can be directly connected to the television by way of a signal wire, but the auxiliary speaker is preferably wirelessly connected to the television, the television sound signal output being connected to a wireless adaptor which can transmit the signal to the separate auxiliary speaker.

### BRIEF DESCRIPTION OF THE PREFERRED EMBODIMENTS

The invention will now be described in more detail, by way of example, with reference to the accompanying drawing, in which:

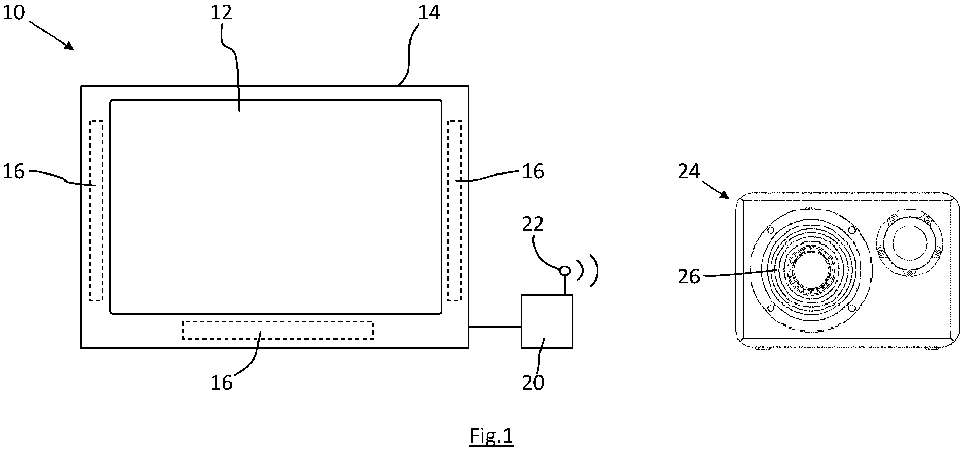

- Fig.1: shows a schematic representation of the preferred embodiment of the auxiliary speaker connected wirelessly to a television by way of a wireless adaptor.

### DETAILED DESCRIPTION

The television 10 is a flat screen television having a screen 12 and a housing 14. In common with many flat screen televisions, the television's speakers 16 are located to the sides of the screen 12 and underneath the screen 12 (the speakers 16 will generally be an array of small speakers which are unobtrusive or invisible, and so are represented by the dashed rectangles).

The speakers 16 are necessarily of relatively small size so that they can fit within the relatively small width of the housing 14 surrounding the screen 12, and the relatively small depth of housing behind the screen (i.e. the dimension into the paper as drawn). Thus, whilst it would be possible to increase the size of the housing so as to fit speakers of larger dimension, most television designers seek to maximise the area of the screen relative to the frontal area of the housing, and also to minimise the depth of the housing, so that in practice the space available for the speakers is severely restricted.

In particular, the space available for the speakers 16 is not sufficient to allow the speakers to produce low frequency sounds at the volumes desired by the producers of many films and many video games, so that the viewer of such films, and the player of such video games, receives less than the intended sound impact from the television's speakers alone.

To overcome this shortcoming, the audio output channel (not seen) of the television 10 is connected to a wireless adaptor 20, which wireless adaptor has an aerial 22 (which may not be seen in practice) whereby it can send an audio signal wirelessly to the auxiliary speaker 24. The audio signal corresponds to the sound frequency and volume desired, whereby the auxiliary speaker 24 can produce part of the frequency range required by the film, video game or the like being displayed by the television 10.

Importantly, the auxiliary speaker 24 has its own power supply and amplifier so that whilst the volume of sound which is generated is dependent upon the audio signal received from the wireless adaptor 20, only the control signal is received wirelessly. The auxiliary speaker 24 receives its power directly from the mains electrical supply and is not dependent upon the television 10 for its power supply.

In the embodiment shown the diameter of the speaker cone 26 of the auxiliary speaker 22 is 8 inches (approx. 203 mm), and in alternative embodiments is 5 inches (approx. 127 mm) or 6 inches (approx. 152 mm); the frequency range of all embodiments being 30 Hz to 500 Hz, but the larger diameter speaker cones being adapted to produce sounds of greater volume.

It can be arranged that the bass speaker(s) of the television 10 is switched off when the wireless adaptor 20 is connected, either manually by the user or automatically. Alternatively, the bass speaker(s) of the television is retained, it being understood that the low frequency sounds generated by the auxiliary speaker 24 will substantially overwhelm the bass sounds generated by the television's own bass speaker(s).

In order to avoid any sound distortion which might arise if the auxiliary speaker 24 and the television's own bass speaker(s) are producing sounds of the same or similar frequency, the auxiliary speaker 24 can include a controller (not seen) which is responsive to the sounds being produced by the television's speakers 16. If, for example, the television's speakers 16 can produce sounds of the desired volume in the frequency range of 400 Hz to 500 Hz for example, the controller could limit the output of the auxiliary speaker 24 to avoid those frequencies, so that the auxiliary speaker 24 would complement the television's own speakers 16.

The controller can detect the output of the television's speakers 16 directly by way of a microphone or the like mounted upon the auxiliary speaker 24, or it can receive signals corresponding to the output of the television's speakers 16 from the wireless adaptor 20. The wireless adaptor 20 can have its own microphone to detect the output of the television's speakers 16, or it can receive information upon the output of the speakers 16 from the audio output channel of the television 10.

## Claims

1. An auxiliary speaker (24) for a television (10), the auxiliary speaker having an output frequency range with a lower limit of approximately 30Hz.

2. An auxiliary speaker (24) according to claim 1 having an output frequency range with an upper limit of approximately 500Hz.

3. An auxiliary speaker (24) according to claim 2 including a controller, the controller being adapted to receive signals indicative of the audio output of the internal speakers (16) of the television (10).

4. An auxiliary speaker (24) according to claim 3 in which the controller is adapted to modify the output of the auxiliary speaker dependent upon the audio output of the television speakers (16).

5. An auxiliary speaker (24) according to claim 3 or claim 4 in which the controller is adapted to reduce the upper limit of the output frequency range of the auxiliary speaker.

6. An auxiliary speaker (24) according to any one of claims 1-5 adapted for wireless connection to the television (10).

7. A television sound system comprising a set of speakers (16) mounted upon the television (10) and an auxiliary speaker (24) remote from the television, the system being configured so that higher frequency audio output of the television is issued by the television speakers (16) and lower frequency audio output of the television is issued by the auxiliary speaker (24).

8. A television sound system according to claim 7 in which the system includes a wireless adaptor (20), the wireless adaptor being connected to the television and being in wireless communication with the auxiliary speaker (24).

9. A television sound system according to claim 8 in which the frequency range of the audio output of the television speakers (16) is modified by the connection of the wireless adaptor (20) to the television (10).

10. A television sound system according to claim 8 in which the frequency range of the audio output of the television speakers (16) is automatically modified by the connection of the wireless adaptor (20) to the television (10).

11. A television sound system according to any one of claims 7-10 in which the auxiliary speaker (24) includes a controller, and in which the controller includes means to modify the output frequency range of the auxiliary speaker dependent upon the audio output of the television speakers (16).

12. A television sound system according to claim 11 in which the controller includes means to reduce the upper limit of the output frequency range of the auxiliary speaker.

13. A television sound system according to claim 11 or claim 12 in which the controller includes means to detect the audio output of the television speakers (16).

14. A television sound system according to claim 11 or claim 12 in which the controller receives signals corresponding to the output of the television speakers (16) from the wireless adaptor (20).

15. A television sound system according to claim 14 in which the wireless adaptor (20) includes means to detect the audio output of the television speakers (16).
